# FASCICULE DE BREVET EUROPEEN

(11) **EP 1 844 088 B1**
(45) Date de publication et mention de la délivrance du brevet: **27.01.2010**
(21) Numéro de dépôt: 05824474.0
(22) Date de dépôt: 06.12.2005
(51) Int. Cl.: C08G 77/08, C08G 77/18, C07F 7/08, C08K 5/54

(54) **PROCEDE DE PREPARATION DE POLYORGANOSILOXANE A GROUPEMENTS FONCTIONNELS EN PRESENCE DE SILANOLATE DE LITHIUM**
VERFAHREN ZUR HERSTELLUNG VON POLYORGANOSILOXAN MIT FUNKTIONELLEN GRUPPEN IN GEGENWART VON LITHIUMSILANOLAT
METHOD OF PREPARING POLYORGANOSILOXANE WITH FUNCTIONAL GROUPS IN THE PRESENCE OF LITHIUM SILANOLATE

(30) Priorité: 07.12.2004 FR 0412977
(43) Date de publication de la demande: 17.10.2007
(73) Titulaire: Bluestar Silicones France SAS, 69003 Lyon Cedex 03 (FR)
(72) Inventeur: CHAUSSADE, Marc, F-69100 Villeurbanne (FR); GUENNOUNI, Nathalie, F-69540 Irigny (FR)
(86) Numéro de dépôt international: PCT/FR2005/003044
(87) Numéro de publication internationale: WO 2006/061503

(56) Documents cités:
- EP-A- 0 367 696
- US-A- 5 663 269

## Description

### CONTEXTE TECHNIQUE DE L'INVENTION

Le domaine de l'invention, prise dans son premier objet, est celui de la synthèse de polyorganosiloxane (huile et/ou résine) possédant dans sa structure au moins un groupement fonctionnel, chaque groupement fonctionnel étant lié à un atome de silicium, polyorganosiloxane dénommé ci-après PF (polymère fonctionnalisé).

L'invention concerne notamment un procédé de préparation de polyorganosiloxane (huile et/ou résine) possédant dans sa structure au moins un groupement alkoxy, chaque groupement alkoxyle étant lié à un atome de silicium, procédé qui consiste à faire réagir un polyorganosiloxane (huile et/ou résine) possédant dans sa structure au moins un groupement hydroxyle, chaque groupement hydroxyle étant lié à un atome de silicium, avec un silane de fonctionnalisation consistant dans un ou plusieurs polyalkoxysilane(s) en opérant en présence d'un catalyseur spécifique pour cette réaction de fonctionnalisation à base d'un silanolate de lithium qui est avantageusement obtenu à partir du silane de fonctionnalisation.

L'invention, prise dans un second objet, vise également de nouveaux composés à base de type silanolate de lithium mis en oeuvre dans cette réaction de fonctionnalisation.

L'invention, prise dans un troisième objet, vise encore l'utilisation de pareil(s) composé(s) à base de silanolate(s) de lithium comme catalyseur pour la réaction de fonctionnalisation.

Il est connu de préparer ces PF en faisant réagir par exemple un di, un tri ou un tétra alkoxysilane sur une huile polysiloxane comprenant un groupement hydroxyle lié à l'atome de silicium à chaque extrémité de chaîne, mais il est nécessaire d'utiliser un catalyseur. A titre de catalyseurs, on peut faire appel en particulier aux composés suivants :
- l'acétate de potassium (cf. US-A-3 504 051),
- les oxydes minéraux divers (cf. FR-A-1 495 011),
- les carbamates (cf. EP-A-0 210 402),
- la lithine (cf. EP-A-0 367 696),
- la soude ou la potasse (cf. EP-A-0 457 693).

Parmi ces catalyseurs, celui décrit par le document brevet EP-A-0 367 696 est particulièrement avantageux dans la mesure où les matières premières nécessaires sont relativement économiques et notamment le catalyseur qui est la lithine (LiOH ou LiOH, H₂O). Cet art antérieur fait valoir très justement la simplicité du procédé, une certaine innocuité du catalyseur vis-à-vis des coupures de chaînes des huiles silicones (à la différence notamment de la potasse) et une réaction de fonctionnalisation rapide, s'achevant notamment en moins de 5 à 10 minutes.

Les silanes utilisés sont des silanes comportant plusieurs fonctions alkoxylées, comme par exemple le silicate d'éthyle Si(OCH₂CH₃)₄, le méthyltriméthoxysilane ou encore le vinyltriméthoxysilane. Dans le cas où le silane comporte au moins trois fonctions alcoxylées et sans que ce soit la seule utilisation possible, les huiles et résines ainsi fonctionnalisées peuvent être utilisées, après neutralisation du catalyseur à la lithine, dans la préparation des mastics monocomposants dégageant un alcool à l'utilisation. Le document brevet EP-A-0 367 696 propose un exemple d'une telle utilisation (cf. exemple 7) ; c'est ainsi que sous agitation sont chargés :
- 100g d'un α,ω-dihydroxypolydiméthylsiloxane de viscosité 20 Pa.s,
- 5 g de vinyltriméthoxysilane, et
- 0,005 g de LiOH,H₂O en solution à 10% en poids dans du méthanol (soit 0,045 g de méthanol).
   Après un temps de réaction de 5 minutes, 0,064 g de solution neutralisante est introduit. Puis sont ajoutés 3 g de silane β-aminoéthyl-γ-aminopropyltriméthoxysilane, 0,05 g de dilaurate de dibutylétain, 105 g de carbonate de calcium traité par de l'acide stéarique et 8 g de silice de combustion traitée. Le produit obtenu est stocké à l'abri de l'humidité et montre une bonne conservation.

Dans l'exemple ci-dessus, la lithine est introduite dans le méthanol afin d'augmenter son efficacité. En effet, il est très malaisé de disperser la lithine sous forme de poudre dans le silicone. Il a été observé que la lithine est soluble dans le méthanol jusqu'à une hauteur d'environ 10 % en poids lorsqu'elle se trouve sous forme LiOH, H₂O.

La quantité de méthanol utilisée, du fait des caractéristiques physico-chimiques de ce solvant, peut générer des inconvénients sérieux en termes d'hygiène et de sécurité industrielles.

De plus, pour limiter les phénomènes de dégradation en relation avec la présence de méthanol, il est nécessaire d'ajouter dans le procédé une étape d'agitation sous vide pour retirer ce méthanol et cette étape est particulièrement critique pour la qualité du produit fini. Les conséquences sont multiples, dont les principales sont les suivantes :
1. perte de productivité liée à cette phase supplémentaire ;
2. risque d'une moins bonne conservation au stockage du produit fini en cas de mauvais contrôle de l'étape d'évaporation ;
3. nécessité de développer un nouveau procédé de récupération des volatils dégagés ;
4. risque d'évaporation des matières premières volatiles (notamment des silanes de bas poids moléculaire).

Par ailleurs, il est particulièrement malaisé de remplacer le méthanol par un autre solvant car il faut que ce solvant soit :
- un solvant de la lithine,
- suffisamment soluble dans le silicone,
- non toxique et non dégradant pour le mastic et inactif vis-à-vis des propriétés d'application du mastic (en termes notamment de couleur, viscosité, adhérence).

Tout solvant ne présentant pas ces trois caractéristiques ne peut remplacer le méthanol.

### BUT DE L'INVENTION

Dans un tel état de la technique, la Demanderesse a maintenant trouvé, et c'est ce qui constitue le domaine de l'invention prise dans ses différents objets, une nouvelle mise en oeuvre de la lithine qui supprime les inconvénients listés ci-avant (liés à l'introduction d'un alcool aliphatique comme par exemple le méthanol) et débouche sur les avantages suivants :
- productivité optimale,
- maîtrise améliorée de la qualité du mastic,
- suppression de l'évaporation des volatils,
- maîtrise de la composition du mastic (suppression du risque de perte de matière volatile à la fabrication).

Selon un autre avantage encore, il a été observé que la stabilité des PF préparés conformément à la nouvelle mise en oeuvre de la lithine est sensiblement plus importante lorsque que l'on opère conformément à la présente invention par rapport à ce qui se passe en opérant conformément à l'enseignement de EP-A-0 367 696.

Plus précisément, il a été trouvé que les avantages précités sont atteints en mettant en oeuvre la lithine sous forme d'un organo-silanolate de lithium, lequel résulte de la mise en solution réactive, dans une étape préalable, de la lithine dans le (ou les) silane(s) de fonctionnalisation.

### DESCRIPTION DE LA PRESENTE INVENTION

I - La présente invention, prise dans son premier objet, concerne donc tout d'abord un procédé de préparation de polyorganosiloxane possédant dans sa structure au moins un groupement fonctionnel, chaque groupement fonctionnel étant lié à un atome de silicium, qui consiste à faire réagir un polyorganosiloxane possédant dans sa structure au moins un groupement hydroxyle, chaque groupement hydroxyle étant lié à au moins un atome de silicium, avec par motif silanol (≡Si-OH) au moins 1 mole et, de préférence, 2 à 30 moles d'au moins un polyalkoxysilane de formule :

   (R¹)ₐ(R²)_{b}Si (OR³)_{4-(a+b)} (I)

   où :
   +R¹ représente : un radical alkyle, linéaire ou ramifié, en C₁-C₁₀ ; un radical cycloalkyle en C₅-C₁₀ ; un radical aryle en C₆-C₁₈ ;
   + R² représente un groupement fonctionnel de formule :

   -(Z)ₘ-(X)ₙ

   avec:
   m = 0 ou 1 ;
   n = 1 ou 2 ;
   Z représente un reste hydrocarboné en C₁-C₃₀ divalent ou trivalent pouvant renfermer un ou plusieurs hétéroatome(s) oxygéné(s) de type : reste aliphatique linéaire ou ramifié saturé ou insaturé, reste cyclanique, reste aromatique, reste mixte aliphatique/aromatique ;
   X, quand m = 0, représente un radical hydrocarboné insaturé en C₂-C₆ comportant une double liaison et éventuellement une autre double liaison conjuguée ou non à la première, de type : reste aliphatique linéaire ou ramifié, reste cyclanique ;
   X, quand m = 1, représente un reste choisi parmi ceux de formule : atome de chlore, brome ou iode ; -O-CO-CR⁴=CR⁵R⁶ où R⁴, R⁵ et R⁶, identiques ou différents, représentent chacun : un atome d'hydrogène, un radical alkyle en C₁-C₆ et/ou un radical phényle ; -R^{F} où R^{F} représente un reste perfluoré comme par exemple le radical -CpF₂p-CF₃ (p égal à 0 ou différent de 0) ou le radical -C_{p'}F_{2p'}-H (p' égal à 1 ou supérieur à 1) ; -NHR⁷ où R⁷ représente un atome d'hydrogène, un radical alkyle, linéaire ou ramifié, en C₁-C₆, un radical -R⁸-NH₂ où le symbole R⁸ représente
   Z ; -SH ;
   + R³ représente un radical alkyle, linéaire ou ramifié, en C₁-C₄ ;
   + a = 0, 1, 2 ou 3;
   + b = 0 ou 1 ;
   + a + b = 0, 1, 2 ou 3, avec la condition supplémentaire selon laquelle quand la somme a+b = 3, le symbole b ne peut être un nombre égal à 0 ; en opérant en présence d'une quantité efficace d'un catalyseur à base d'un dérivé du lithium,
   ledit procédé étant caractérisé par les points suivants :
   - ledit catalyseur est un composé constitué essentiellement d'un organo-silanolate de lithium de formule :

      (R¹)ₐ(R²)_{b}(OR³)_{3-(a+b)}SiO ⁻ Li⁺ (II)

      où les symboles R¹, R², R³, a et b ont les significations données ci-avant ;
   - ledit procédé est conduit en absence d'un alcool aliphatique de formule R³OH ajouté dans le milieu réactionnel.
   Par l'expression "polyorganosiloxane possédant dans sa structure au moins un groupement fonctionnel", on entend définir, au sens de la présente invention, un polyorganosiloxane possédant dans sa structure au moins un groupement choisi parmi les groupements OR³ et R² tels que définis ci-avant.
   Par l'expression "polyalkoxysilane de formule (I)", on entend désigner un silane de ce type pris seul ou en mélange avec les oligomères résultant de son hydrolyse partielle suivie d'une polycondensation.
II - La présente invention, prise dans son second objet, concerne de nouveaux composés à base d'un dérivé du lithium, utilisables notamment comme catalyseurs dans la synthèse de PF, **caractérisés en ce qu**'il s'agit de composés constitués essentiellement d'organo-silanolates de lithium de formule (II) où les symboles R¹, R², R³, a et b ont les significations données ci-avant.
   Les composés constitués essentiellement d'organo-silanolates de lithium de formule (II) sont obtenus en faisant réagir la lithine (ou hydroxyde de lithium) avec au moins un silane de fonctionnalisation de formule (I), en opérant à la température ambiante (c'est-à-dire aux alentours de 25°C), sous atmosphère anhydre et à la pression atmosphérique.
   En ce qui concerne la lithine mise en oeuvre, elle se trouve largement dans le commerce. Sa formule est LiOH ou LiOH,H₂O On utilise de préférence LiOH, H₂O qui correspond à la forme stabilisée de la lithine.
   Dans le procédé de préparation des silanolates, par mole de lithine on utilise généralement au moins 1 mole et, de préférence, 1,5 à 10 moles de polyalkoxysilane(s) de formule (I).
   Les silanolates se formeraient de la manière suivante :

   (R¹)ₐ(R²)_{b}Si(OR³)_{4-(a+b)} + LiOH,H₂O→ (R¹)ₐ(R²)_{b}(OR³)₃₋₍ₐ-_{b)}SiO⁻ Li⁺ + R³OH + H₂O

   Quand on utilise LiOH, H₂O il est préférable d'opérer dans un excès de silane ; le silane en excès joue alors le rôle de solvant et il permet, au besoin, de consommer par hydrolyse l'eau formée selon le schéma réactionnel donné ci-avant.
   A noter que le procédé de préparation des silanolates qui vient d'être décrit peut être mis en oeuvre aussi avec succès pour la préparation d'un composé constitué essentiellement d'un organo-silanolate de lithium de formule (II) dans laquelle le symbole b est égal à 0 et la somme a + b est égale à 3.
III - La présente invention, prise dans son troisième objet, concerne encore l'utilisation d'une quantité efficace d'au moins un composé constitué essentiellement d'organo-silanolate de lithium de formule (II) comme catalyseur pour la préparation de polyorganosiloxane possédant dans sa structure au moins un groupement fonctionnel, chaque groupement fonctionnel étant lié à un atome de silicium, par un procédé qui consiste à faire réagir un polyorganosiloxane possédant dans sa structure au moins un groupement hydroxyle, chaque groupement hydroxyle étant lié à au moins un atome de silicium, avec par motif silanol au moins 1 mole et, de préférence, de 2 à 20 moles d'au moins un polyalkoxysilane de formule :

   (R¹)ₐ(R²)_{b}Si (OR³)_{4-(a+b)} (I)

   où les symboles R¹, R², R³, a et b ont les significations données ci-avant.
Par quantité efficace de catalyseur, on entend une quantité telle que la vitesse de réaction est notablement améliorée et que la température de la réaction est la plus proche possible de la température ambiante (25°C). Généralement, on utilise de 0,001 à 3 moles, de préférence de 0,001 à 2 moles et plus préférentiellement encore de 0,005 à 1 mole de composé constitué essentiellement de silanolate de lithium par rapport à 1 motif ≡Si-OH du polyorganosiloxane possédant dans sa structure au moins un groupement hydroxyle.

### DESCRIPTION DETAILLEE DES MODALITES PREFERENTIELLES DE LA PRESENTE INVENTION

De préférence :
- les polyorganosiloxanes possédant dans leur structure au moins un groupement fonctionnel consistent dans des diorganopolysiloxanes essentiellement linéaires comprenant au moins un groupement fonctionnel à chaque extrémité de chaîne de formule : 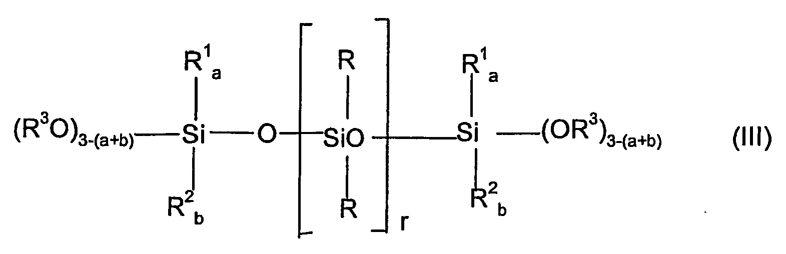
- et les polyorganosiloxanes possédant dans leur structure au moins un groupement hydroxyle consistant dans les diorganopolysiloxanes essentiellement linéaires comprenant au moins un groupement hydroxyle à chaque extrémité de chaîne de formule : 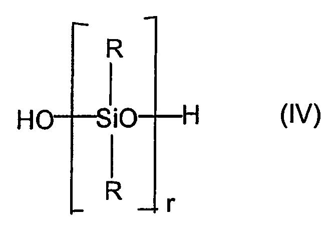 formules dans lesquelles : R¹, R², R³, a et b ont les mêmes significations que celles données ci-avant pour le silane de formule (I) ; les radicaux R, identiques ou différents, représentent chacun un radical alkyle linéaire ou ramifié en C₁-C₁₀, un radical cycloalkyle en C₅-C₁₀, un radical alcényle linéaire ou ramifié en C₂-C₆ ; r a une valeur suffisante pour conférer aux polymères de formules (III) et (IV) une viscosité de 10 à 1 000 000 mPa.s à 25°C, étant entendu que le polysiloxane de formule (III) peut avoir une formule moyenne dans laquelle la valeur de r est plus forte ou plus faible que la valeur de r du polysiloxane de formule (IV) réagissant sur le silane de formule (I).

Les polymères de formule(s) (III) et/ou (IV) peuvent présenter en outre dans leur structure des motifs mono-organosiloxyles RSiO_{3/2} et/ou des motifs SiO₂ dans la proportion d'au plus 3% par rapport au nombre de motifs diorganosiloxyles R₂SiO_{2/2}.

Les radicaux de types R¹ et R mentionnés ci-avant comprennent notamment :
- les radicaux alkyles ayant de 1 à 10 atomes de carbone tels que les radicaux méthyle, éthyle, isopropyle, butyle, pentyle, hexyle, éthyl-2 hexyle, octyle, décyle ;
- les radicaux cycloalkyles ayant de 5 à 10 atomes de carbone tels que les radicaux cyclopentyle, cyclohexyle, méthylcyclohexyle, propylcyclohexyle ;
- les radicaux alcényles ayant de 2 à 6 atomes de carbone tels que les radicaux vinyle, allyle, butène-2yle ;
- les radicaux aryles mononucléaires ou polynucléaires ayant de 6 à 18 atomes de carbone tels que les radicaux phényle, tolyle, xylyle, naphtyle, phénanthryle.

A titre d'exemples concerts de motifs R₂SiO présents dans le polysiloxane de formule(s) (III) et/ou (IV) on peut citer :

(CH₃)₂SiO,

CH₃(CH₂ = CH)SiO,

CH₃(C₆H₅)SiO,

(C₆H₅)₂SiO.

Il doit être compris que dans le procédé selon la présente invention, on peut utiliser comme polymère de formule (IV) un mélange constitué de polymères alpha, oméga-di(hydroxy)-diorganopolysiloxanes qui diffèrent entre eux par le poids moléculaire et/ou la nature des groupements liés aux atomes de silicium.

Les restes Z mentionnés ci-avant comprennent par exemple :
- un radical divalent alkyléne, linéaire ou ramifié, comprenant de 1 à 15 atomes de carbone dont la valence libre est portée par un atome de carbone et est reliée à un atome de silicium, ledit radical pouvant être interrompu au sein de la chaîne alkylène par au moins un hétéroatome oxygéné tels que les radicaux : -(CH₂)₂-, -(CH₂)₃-, - (CH₂)₄, -CH₂-CH(CH₃)-, -(CH₂)₂-CH(CH₃)-CH₂-, -(CH₂)₃-O-(CH₂)₃-(CH₂)₃-O-CH₂-CH(CH₃)-CH₂-, -(CH₂)₃-O-CH₂CH(OH)-CH₂-, cyclohexylène ;
- un radical aromatique divalent choisi parmi : -phénylène(ortho, méta ou para)-alkylène(linéaire ou ramifié en C₂-C₆)-, -phénylène(ortho, méta ou para)-O-alkylène (linéaire ou ramifié en C₂-C₆)-, -alkylène(linéaire ou ramifié en C₂-C₆)-phénylène(ortho, méta ou para)-alkylène(linéaire ou ramifié en C₁-C₆)- et -alkylène (linéaire ou ramifié en C₂-C₆)-phénylène(ortho, méta ou para)-O-alkylène(linéaire ou ramifié en C₁-C₆)-,

De manière préférée, Z représente un radical -(CH₂)₂- ou -(che₂)₃-.

Parmi les polyalkoxysilanes de formule (I) pouvant être utilisés dans la présente invention, on citera de préférence les silanes de fonctionnalisation de formule (I) dans laquelle :
+ R¹ est choisi dans le groupe des radicaux méthyle, éthyle et phényle ;
+ R² est choisi dans le groupe des radicaux de formule :

   -CH=CH₂,

   -CH₂-Cl, -(CH₂)₃-Cl,

   -CH₂O-CO-C(H ou CH₃)=CH₂, -(CH₂)₃-O-CO-C(H ou CH₃)=CH₂, 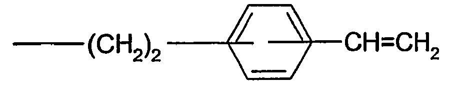 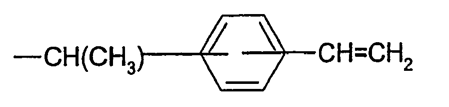
ou des mélanges de ces radicaux vinylarylalkyles, 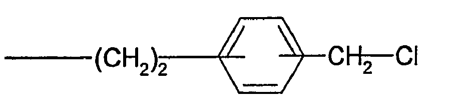 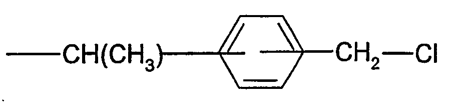 des mélanges de ces radicaux chloroalkylarylalkyles,

-(CH₂)₃-NH₂, -(CH₂)₃-NH-(CH₂)₂-NH₂,

-(CH₂)₃-SH,

+ R³ est choisi parmi les radicaux méthyle et éthyle,
+ a = 0, 1 ou 2,
+ b = 0 ou 1,
+ a + b = 0, 1 ou 2.

A titre de polyalkoxysilanes spécialement préférés, on citera les composés suivants :
tétraméthoxysilane (TMO),
tétraéthoxysilane (TEO),
tétrapropoxysilane,
méthyltriméthoxysilane (MTMO),
méthyltriéthoxysilane (MTEO),
propyltriméthoxysilane (PrTMO),
propyltriéthoxysilane (PrTEO),
phényltriméthoxysilane (PhTMO),
phényltriéthoxysilane (PhTEO),
vinyltriméthoxysilane (VTMO),
vinyltriéthoxysilane (VTEO),
3-chloropropyltriméthoxysilane,
[2-(o,m,p-chlorométhylphényl)éthyl]triméthoxysilane, [1-(o,m,p-chlorométhylphényl)éthyl]-triméthoxysilane et leurs mélanges,
3-aminopropyltriméthoxysilane,
3-aminopropyltriéthoxysilane,
[3-(2-aminoéthyl)aminopropyl]triméthoxysilane,
3-mercaptopropyltriméthoxysilane,
3-méthacryloxypropyltriméthoxysilane,
3-acryloxypropyltriméthoxysilane.

S'agissant des composés constitués essentiellement d'organo-silanolates de lithium de formule (II) pouvant être utilisés dans la présente invention, on citera de préférence les composés constitués essentiellement de silanolates de lithium de formule (II) dans laquelle les symboles R¹, R², R³, a et b ont les significations données ci-avant à propos de la définition des silanes de fonctionnalisation préférés.

A titre de catalyseurs spécialement préférés, on citera les composés constitués essentiellement de silanolates de lithium correspondant aux silanes de fonctionnalisation spécialement préférés listés ci-avant.

En ce qui concerne la préparation des composés constitués essentiellement de silanolates de lithium, cette dernière est mise en oeuvre à l'abri de l'humidité, par exemple dans un réacteur fermé muni d'une agitation dans lequel on peut, au besoin, remplacer l'air par un gaz anhydre, par exemple par de l'azote.

Cette préparation est généralement effectuée à température ambiante (25°C) en opérant une agitation des réactifs nécessaires pendant une durée allant par exemple de quelques minutes à plusieurs heures ; à titre indicatif, la durée se situe pratiquement dans l'intervalle allant de 5 minutes à 10 heures ou davantage. La réaction est considérée comme achevée au moment où la lithine a été entièrement consommée ; le mélange réactionnel est alors limpide ou très légèrement trouble.

En ce qui concerne la préparation des polyorganosiloxanes fonctionnels de formule (III) consistant à faire réagir les polyorganosiloxanes hydroxylés de formule (IV) sur les silanes de formules (I), le procédé est mis en oeuvre là aussi à l'abri de l'humidité, par exemple dans un réacteur fermé muni d'une agitation dans lequel on peut, au besoin, remplacer l'air par un gaz anhydre, par exemple par de l'azote.

On charge les réactifs et le catalyseur dans le réacteur. La réaction est généralement effectuée à température se situant dans l'intervalle allant de 0 à 50°C, de préférence allant de 20 à 40°C. Le procédé de fonctionnalisation est conduit pendant une période de temps suffisante (allant par exemple de 30 secondes à 60 minutes) pour réaliser une réaction de fonctionnalisation complète ou le plus proche possible du degré maximal de fonctionnalisation accessible dans les conditions opératoires choisies.

Lorsque la réaction de fonctionnalisation est terminée, on procède, et il s'agit là de mesures facultatives qu'il est cependant préférable de réaliser, à la neutralisation du catalyseur et à la dévolatilisation de la masse réactionnelle obtenue pour en éliminer l'alcool formé au cours de la réaction de fonctionnalisation et l'excès éventuel du silane de fonctionnalisation.

### Exemple d'un domaine d'application des polyorganosiloxanes fonctionnels :

Les polyorganosiloxanes fonctionnels, en particulier les diorganopolysiloxanes comprenant au moins deux groupements alkoxyles à chaque extrémités de chaîne, obtenus selon le procédé de la présente invention prise dans son premier objet, sont avantageusement utilisables pour la préparation de compositions polysiloxanes monocomposantes stables au stockage en absence d'humidité et réticulant en élastomère (pouvant être appelés mastics) en présence d'humidité.

Par exemple, ces compositions sont obtenues en ajoutant (en poids) à 100 parties du polymère fonctionnalisé de formule (III) préparé conformément au procédé de l'invention :
- 0 à 250 parties de charge(s) minérale(s),
- 0 à 15 parties de polyalkoxysilane(s) de formule (I),
- 0 à 20 parties, de préférence 0 à 10 parties, d'au moins un additif choisi parmi les ingrédients suivants : des agents d'adhérence ; des diorganopolysiloxanes essentiellement linéaires non réactifs ; des antifongiques ; des bactéricides ; des diluants inertes organiques (tels que par exemple : le toluène, le xylène, l'heptane, le "White-Spirit", le trichloroéthylène, le tétrachloroéthylène) ; des plastifiants hydrocarbonés ; des agents thixotropants,
- une quantité efficace de catalyseur de condensation ; par quantité efficace de catalyseur de condensation, on entend par exemple de 0,001 à 5 parties en poids, de préférence de 0,001 à 2 parties, d'au moins un composé d'un métal choisi parmi l'étain, le titane, le zirconium et leurs mélanges.

Pour plus de détails sur la définition des compositions polysiloxanes monocomposantes, on pourra se reporter notamment au document brevet suivant : EP-A-0 367 696, EP-A-0 457 693, EP-A-1 141 131.

Comme catalyseur de condensation on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A-4 517 337 cités comme référence sont particulièrement appropriés.

Sont également préférés, les catalyseurs de condensation qui sont un mélange d'un bis(β-dicétonate) de diorganoétain avec un dérivé organique de l'étain, également de valence IV, mais exempt de fonction β-dicétonato, et possédant au moins un atome d'étain, chaque atome d'étain portant deux radicaux organiques liés par une liaison Sn-C, les deux autres valences étant satisfaites au moyen de radicaux choisi parmi les radicaux organiques ou inorganiques liés par une liaison SnO, SnS, par des atomes d'halogènes, par des groupes hydroxy et par des atomes d'oxygène.

Les charges minérales sont utilisées à raison de 0 à 250 parties en poids, de préférence de 5 à 200 parties pour 100 parties en poids de PF de formule (III).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40m²/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30m²/g.

Ces charges peuvent avoir été modifées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevet français FR-A-1 126 884, FR-A-1 136 885, FR-A-1 236 505 ; brevet anglais GB-A-1 024 234). Les charges traitées renferment, dans la plupart des cas, de 3 à 30% de leurs poids de composés organosiliciques.

Les charges peuvent être constituées d'un mélange de plusieurs types de charges de granulométrie différente ; ainsi, par exemple, elles peuvent être constituées de 30 à 70% de silices finement divisées de surface spécifique BET supérieure à 40 m²/g et de 70 à 30% de silices plus grossièrement divisées de surface spécifique inférieure à 30 m²/g.

De préférence, l'agent d'adhérence, quand on en utilise un, est choisi parmi les composés organosiliciques portant à la fois (1) des groupes hydrolysables liés à l'atome de silicium et (2) des groupes organiques substitués par des radicaux choisis dans le groupe des radicaux amino, isocyanato, époxy, alkényle et isocyanurate.

Les exemples suivants illustrent la présente invention.

### Exemple 1 :

### 1) Préparation du catalyseur :

Dans un flacon en verre de 25 ml contenant un barreau aimanté, 19,25 g de vinyltriméthoxysilane (VTMO) sont introduits ainsi que 0,80 g de lithine (LiOH, H₂O). Le flacon est fermé et le milieu est abandonné 15 h sous agitation. Une solution limpide est obtenue.

Un spectre est réalisé en microscopie IR sur un échantillon préalablement dévolatilisé pour éliminer le vinyltriméthoxysilane introduit en excès. Un solide est ainsi obtenu. Le spectre obtenu sur l'échantillon est compatible avec la présence simultanée des fonctions SiOMe (2843 cm-1), SiVi (3051 cm-1) et SiOLi (990, 758 et 667 cm-1).

### 2) Fonctionnatisation :

Dans un pentacol de 250 ml muni d'une agitation mécanique, d'un réfrigérant ascendant et d'une sonde de température, sont introduits successivement à température ambiante et sous agitation modéré (80T/min) :
- l'huile polydiméthylsiloxane bloquée par des groupements hydroxysilyles HO[Me₂SiO]₄₅H, 100,73 g (60,2 x 10⁻³ mole de fonction SiOH),
- le vinyltriméthoxysilane (VTMO) ViSi(OMe)₃, 23,74 g (160 x 10⁻³ mole).

Le symbole Vi désigne le radical vinyle : CH₂=CH- ; le symbole Me désigne le radical méthyle.

Le silanolate de lithium en solution dans le VTMO (3,83 g de la solution préparée au paragraphe 1, soit 3,64 x 10⁻³ mole de silanolate de lithium, soit 0,06 mole de silanolate de lithium par mole de silanol) est alors introduit à 21 °C. Le milieu jusqu'alors limpide se trouble légèrement et la température augmente de 5°C.

Après 3 minutes d'agitation, un prélèvement de 7,78 g du milieu réactionnel est réalisé puis immédiatement neutralisé à l'acide acétique (0,27 g d'une solution toluénique d'acide acétique à 5,24% en poids soit 2,35 x 10⁻⁴ mole d'acide ou 1,04 mole de fonction acide par mole de silanolate).

L'analyse RMN ²⁹Si réalisée dans le CDCl₃ sur le milieu brut montre que la fonctionnalisation est complète.

| Type de signal | D(OH) | D | T^{Vi}(OR)3 | T^{Vi}(OR)2 |
|---|---|---|---|---|
| δ (ppm) | -11,0 | -22,0 | -55,2 | -63,6 |
| % molaire | 0 | 88 | 8 | 4 |

La structure de l'huile obtenue est la suivante Vi(OMe)₂SiO(Me₂SiO)₄₅Si(OMe)₂Vi.

Le reste du milieu réactionnel est abandonné 90 minutes supplémentaires. L'analyse RMN ²⁹Si réalisée après neutralisation ne fait apparaître aucune dégradation de la chaîne silicone.

### Exemple 2 :

### 1) Préparation du catalyseur :

Dans un flacon en verre de 25 ml contenant un barreau aimanté, 18,57 g de tétraéthoxysilane (TEO) sont introduits ainsi que 0,79 g de lithine (LiOH, H₂O). Le flacon est fermé et le milieu est abandonné 15 h sous agitation. Une solution limpide est obtenue.

### 2) Fonctionnalisation :

Dans un pentacol de 250 ml muni d'une agitation mécanique, d'un réfrigérant ascendant et d'une sonde de température, sont introduits successivement à température ambiante et sous agitation modéré (80T/min) :
- l'huile polydiméthylsiloxane bloquée par des groupements hydroxysilyles HO[Me₂SiO]₄₅H, 100,05 g (59,8 x 10⁻³ mole de fonction SiOH),
- le tétraéthoxysilane (TEO) (EtO)₄Si, 34,19 g (164 x 10⁻³ mole).

Le symbole Et désigne le radical éthyle.

Le symbole Vi désigne le radical vinyle : CH₂=CH- ; le symbole Me désigne le radical méthyle.

Le silanolate de lithium en solution dans le TEO (3,68 g de la solution préparée au paragraphe 1, soit 3,58 x 10⁻³ mole de silanolate de lithium, soit 0,06 mole de silanolate de lithium par mole de silanol) est alors introduit à 24°C. La température du milieu augmente légèrement et passe à 25°C.

Des prélèvements sont réalisés au cours du temps à 3, 9, 20 et 90 minutes pour suivre l'évolution de la réaction.

Chaque prélèvement est immédiatement neutralisé à l'acide acétique (1,04 mole de fonction acide par mole de silanolate) en utilisant une solution toluénique d'acide acétique à 5,24% en poids.

L'analyse RMN ²⁹Si réalisée dans le CDCl₃ sur chacun des prélèvements montre que la fonctionnalisation est complète après 9 minutes de réaction.

| Type de signal | D(OH) | D | Q(OR)4 | Q(OR)3 |
|---|---|---|---|---|
| δ (ppm) | -11,0 | -22,0 | -81,8 | -88,1 |
| % molaire | 0 | 90,5 | 5,5 | 4 |

La structure de l'huile obtenue est la suivante (OET)₃SiO(Me₂SiO)₄₅Si(OEt)₃.

Le reste du milieu réactionnel est abandonné 90 minutes supplémentaires. L'analyse RMN ²⁹Si réalisée après neutralisation ne fait apparaître aucune dégradation de la chaîne silicone.

### Exemple 3 :

### 1) Préparation du catalyseur :

Dans un flacon en verre de 25 ml contenant un barreau aimanté, 19,19 g de phényltriméthoxysilane (PhTMO) sont introduits ainsi que 0,81 g de lithine (LiOH, H₂O). Le flacon est fermé et le milieu est abandonné 15 h sous agitation. Une solution limpide est obtenue.

### 2) Fonctionnalisation :

Dans un pentacol de 250 ml muni d'une agitation mécanique, d'un réfrigérant ascendant et d'une sonde de température, sont introduits successivement à température ambiante et sous agitation modéré (80T/min) :
- l'huile polydiméthylsiloxane bloquée par des groupements hydroxysilyles HO[Me₂SiO]₄₅H, 100,42 g (60 x 10⁻³ mole de fonction SiOH),
- le phényltriméthoxysilane (PhTMO), PhSi(OMe)₃, 32,08 g (161,8 x 10⁻³ mole). Le symbole Ph désigne le radical phényle.

Le silanolate de lithium en solution dans le PhTMO (3,66 g de la solution préparée ci-avant au paragraphe 1, soit 3,54 x 10⁻³ mole de silanolate de lithium, soit 0,06 mole de silanolate de lithium par mole de silanol) est alors introduit à 27°C. Le milieu jusqu'alors limpide se trouble légèrement avec formation d'une mousse blanche qui disparaît rapidement. La température augmente de 3°C.

Après 3 minutes d'agitation, un prélèvement de 9,10 g du milieu réactionnel est réalisé puis immédiatement neutralisé à l'acide acétique (0,29 g d'une solution d'acide acétique à 5,24%, soit 2,53 x 10⁻⁴ mole d'acide ou 1,04 de fonction acide par mole de silanolate).

L'analyse RMN ²⁹Si réalisée dans le CDCl₃ sur chacun des prélèvements montre que la fonctionnalisation est complète après 3 minutes de réaction.

| Type de signal | D(OH) | D | T^{Ph}(OR)3 | T^{Ph}(OR)2 |
|---|---|---|---|---|
| δ (ppm) | -11,0 | -22,0 | -54,5 | -62,7 |
| % molaire | 0 | 91 | 5 | 4 |

La structure de l'huile obtenue est la suivante Ph(OMe)₂SiO(Me₂SiO)₄₅Si(OMe)₂Ph.

Le reste du milieu réactionnel est abandonné 90 minutes supplémentaires. L'analyse RMN ²⁹Si réalisée après neutralisation ne fait apparaître aucune dégradation de la chaîne silicone.

### Exemple 4 :

### Autre exemple de fonctionnalisation des huiles silicones

### Préparation 0 :

Dans un récipient sont successivement ajoutés :
- 100 parties en poids d'une huile polydiméthylsiloxane α,ω-dihydroxylée de 136 Pa.s de viscosité à 25°C et
- 3 parties en poids de vinyltriméthoxysilane (VTMO).

On effectue le mélange intime de ces constituants, puis on répartit la préparation dans deux récipients.

### Préparation 1 (selon l'art antérieur) :

A 100 g du mélange décrit ci-dessus, on ajoute. 0,5 g d'une solution de lithine hydratée (LiOH,H₂O) à 3,85 % en poids dans le méthanol. La composition est ensuite mélangée 20 s à 1000 tours/min, puis deux fois de suite 15 s à 2000 tours/min dans un outil de mélange de type Speedmixer DAC150 de Hauschild.

On déclenche alors le chronomètre.

### Préparation 2 (selon la présente invention) :

A 100 g de la préparation 0, on ajoute et on mélange selon le même protocole 0,5 g d'une solution de lithine hydratée (LiOH,H₂O) à 3,85 % dans le VTMO (soit 0,458 x 10⁻³ mole de silanolate de lithium ou 0,008 mole de silanolate pour 1 fonction SiOH). Cette solution, bien qu'étant nettement jaune, ne colore pas le mélange final. Cette couleur jaune est liée à la présence des groupes vinyles puisqu'une solution de lithine dans le méthyltriméthoxysilane à la même concentration ne présente pas cette coloration. La solubilité, dans le silane, du silanolate de lithium intermédiairement généré est largement suffisante pour atteindre la concentration visée.

On déclenche le second chronomètre.

### Résultats :

Les deux préparations sont stockées en flacon fermé à 25°C et on prélève à intervalle régulier un échantillon pour effectuer une mesure de viscosité à 23°C.

**TABLEAU 1**

| | Viscosité (en Pa.s) | |
|---|---|---|
| Temps (en min) | Préparation 1 | Préparation 2 |
| 20 | 131 | |
| 25 | | 126 |
| 35 | 126 | 125 |
| 65 | 121 | 124 |
| 1020 | 81 | 82 |
| 1440 | 58,1 | 75,5 |
| 2460 | 38,6 | 62,5 |

### Commentaires :

Dans la mesure où les compositions des deux préparations sont légèrement différentes, la légère différence de viscosité à la première mesure ne peut être interprétée comme une dégradation plus importante de la Préparation 2. En revanche, pour des temps de stockage plus importants, la baisse de viscosité dans le temps est nettement plus forte en ce qui concerne la Préparation 1 que la Préparation 2.

On en conclut que la substitution du VTMO au méthanol constitue un facteur stabilisant pour la préparation.

### Exemple comparatif :

### Préparation d'un mastic témoin avec fonctionnalisation de l'huile silicone hvdroxylée en opérant en présence d'une solution de lithine dans le méthanol

Dans la cuve d'un mélangeur uniaxial « papillon » sont chargés, à 25°C, 425 g d'huile polydiméthylsiloxane α,ω-dihydroxylée (« huile silicone hydroxylée ») de viscosité environ 135 000 mPa.s (soit 7,5 x 10⁻³ mole de fonction SiOH), 48 g d'huile polydiméthylsiloxane α,ω-triméthylsilylée (huile « bloquée ») de viscosité environ 100 000 mPa.s, 116 g d'huile polydiméthylsiloxane α,ω-triméthylsilylée de viscosité environ 100 mPa.s, et 22 g de réticulant vinyltriméthoxysilane (148,6 x 10⁻³ mole).

L'ensemble est mélangé à 200 tours/min pendant 2 min et 2,8 g d'une solution de lithine hydratée (LiOH, H₂O) à 3,85 % en poids dans le méthanol sont introduits dans la cuve. On laisse la réaction de fonctionnalisation se produire pendant 4 min sous agitation de 400 tours/min puis 44 g de silice de pyrogénation développant une surface spécifique de 150 m²/g et 525 g de carbonate de calcium sont incorporés à vitesse d'agitation modérée (160 tours/min), puis plus vive (4 min à 400 tours/min) pour en achever la dispersion dans le mélange.

On ajoute alors environ 10 g d'une préparation comportant un silane aminé et un catalyseur de polycondensation à l'étain. Après 4 min de mélange à 400 tours/min, on diminue la vitesse d'agitation à 130 tours/min et on dégaze le mélange pendant 9 min à 40 x 10²Pa. La préparation est alors stockée à l'abri de l'air jusqu'à son utilisation.

### Exemple 5 :

### Préparation d'un mastic avec fonctionnalisation de l'huile silicone hydroxylée en opérant en présence de silanolate de lithium

Le protocole de l'exemple comparatif précédent est repris, mais en remplaçant, à 25°C, les 2,8 g de solution de lithine dans le méthanol par le composé constitué essentiellement de silanolate de lithium résultant de la réaction de la lithine avec le VTMO contenus dans 1,2 g de solution de lithine hydratée à 11,9 % en poids dans le VTMO (soit 3,4 x 10⁻³ mole de silanolate de lithium ou 0,45 mole de silanolate par mole de fonction SiOH).

### Exemple 6 :

### Réparation d'un mastic avec fonctionnalisation de l'huile silicone hydroxylée en réduisant le temps de dégazage

Le protocole de l'exemple 5 est repris, mais on effectue le dégazage en 3 min au lieu de 9 min comme dans les exemples comparatif et 5.

### Résultats :

Les duretés (mesurées en Shore A sur des épaisseurs de 6 mm constituées soit d'un pion soit de 3 films superposés de 2 mm, selon les indications de la norme ASTM-D-2240) des trois mastics sont comparées dans le tableau 2 ci-après.

Pour chaque mastic, une cartouche hermétiquement close a été stockée en étuve à 50°C pendant 3 semaines pour évaluer la stabilité lors du stockage de la cartouche à température ambiante. La dureté est mesurée sur 3 films superposés de 2 mm après différents temps de réticulation.

**TABLEAU 2**

| | Exemple comparatif | Exemple 5 | Exemple 6 |
|---|---|---|---|
| Dureté 3x2 mm après 7 j | 24 | 22,5 | 22,5 |
| *Prise après vieillissement 3 semaines 50°C* | | | |
| Dureté 3x2 mm après 1 j | 6,5 | 12. | 13 |
| Dureté 3x2 mm après 2 j | 12 | 17 | |
| Dureté 3x2 mm après 7 j | 18,5 | 22 | 21,5 |
| Perte de dureté 7j | -23% | -2% | -4.4% |

| | | | |
|---|---|---|---|
| Remarques : ◆ toutes les réticulations sont effectuées en salle conditionnée à 23°C/50% HR ; ◆ la perte de dureté est la différence relative de dureté entre la dureté à 7 j du mastic conditionné 3 semaines à 50°C et de la mesure initiale. | | | |

### Commentaires :

Le tableau 2 ci-dessus met clairement en évidence une différence de stabilité entre l'exemple comparatif et les deux autres exemples 5 et 6 : perte de 23 % de la dureté initiale après l'expérience de vieillissement dans l'exemple comparatif, contre seulement 2 à 4 % pour les deux autres exemples 5 et 6.

La suppression du méthanol au niveau de la fonctionnalisation conduit donc à une plus grande stabilité du mastic. A noter que la réduction du temps de dégazage n'affaiblit pas la stabilité du mastic comme le montre l'exemple 6, ce qui signifie qu'il est possible de gagner en productivité et de réduire la quantité de volatils extraits du mastic.

## Revendications

1. Procédé de préparation de polyorganosiloxane possédant dans sa structure au moins un groupement fonctionnel, chaque groupement fonctionnel étant lié à un atome de silicium, qui consiste à faire réagir un polyorganosiloxane possédant dans sa structure au moins un groupement hydroxyle, chaque groupement hydroxyle étant lié à au moins un atome de silicium, avec par motif silanol (≡Si-OH) au moins 1 mole d'au moins un polyalkoxysilane de formule :
(R¹)ₐ(R²)_{b}Si (OR³)_{4-(a+b)} (I)
où:
+R¹ représente : un radical alkyle, linéaire ou ramifié, en C₁-C₁₀ ; un radical cycloalkyle en C₅-C₁₀ ; un radical aryle en C₆-C₁₈ ;
+ R² représente un groupement fonctionnel de formule :
-(Z)ₘ-(X)ₙ
avec :
m = 0 ou 1 ;
n = ou 2 ; 1
Z représente un reste hydrocarboné en C₁-C₃₀ divalent ou trivalent pouvant renfermer un ou plusieurs hétéroatome(s) oxygéné(s) de type : reste aliphatique linéaire ou ramifié saturé ou insaturé, reste cyclanique, reste aromatique, reste mixte aliphatique/aromatique;
X, quand m = 0, représente un radical hydrocarboné insaturé en C₂-C₆ comportant une double liaison et éventuellement une autre double liaison conjuguée ou non à la première, de type : reste aliphatique linéaire ou ramifié, reste cyclanique ;
X, quand m = 1, représente un reste choisi parmi ceux de formule : atome de chlore, brome ou iode ; -O-CO-CR⁴=CR⁵R⁶ où R⁴, R⁵ et R⁶, identiques ou différents, représentent chacun : un atome d'hydrogène, un radical alkyle en C₁-C₆ et/ou un radical phényle ; -R^{F} où R^{F} représente un reste perfluoré comme par exemple le radical -CₚF₂ₚ-CF₃ (p égal à 0 ou différent de 0) ou le radical -C_{p'}F_{2p'}-H (p' égal à 1 ou supérieur à 1) ; -NHR⁷ où R⁷ représente un atome d'hydrogène, un radical alkyle, linéaire ou ramifié, en C₁-C₆, un radical -R⁸-NH₂ où le symbole R⁸ représente
Z ; -SH ;
+ R³ représente un radical alkyle, linéaire ou ramifié, en C₁-C₄ ;
+ a = 0, 1, 2 ou 3 ;
+ b = 0 ou 1 ;
+ a + b = 0, 1, 2 ou 3, avec la condition supplémentaire selon laquelle quand la somme a+b = 3, le symbole b ne peut être un nombre égal à 0 ;
en opérant en présence d'une quantité efficace d'un catalyseur à base d'un dérivé du lithium,
ledit procédé étant **caractérisé par** les points suivants :
• ledit catalyseur est un composé constitué essentiellement d'un organo-silanolate de lithium de formule :
(R¹)ₐ(R²)_{b}(OR³)_{3-(a+b)}SiO⁻ Li⁺ (II)
où les symboles R¹, R², R³, a et b ont les significations données ci-avant ;
• ledit procédé est conduit en absence d'un alcool aliphatique de formule R³OH ajouté dans le milieu réactionnel.

2. Procédé selon la revendication 1, **caractérisé en ce que** l'on utilise de 0,001 à 3 moles de composé constitué essentiellement de silanolate de lithium par rapport à 1 motif ≡Si-OH du polyorganosiloxane possédant dans sa structure au moins un groupement hydroxyle.

3. Procédé selon la revendication 1 ou 2, **caractérisé en ce que** :
- les polyorganosiloxanes possédant dans leur structure au moins un groupement fonctionnel consistent dans des diorganopolysiloxanes essentiellement linéaires comprenant au moins un groupement fonctionnel à chaque extrémité de chaîne de formule : 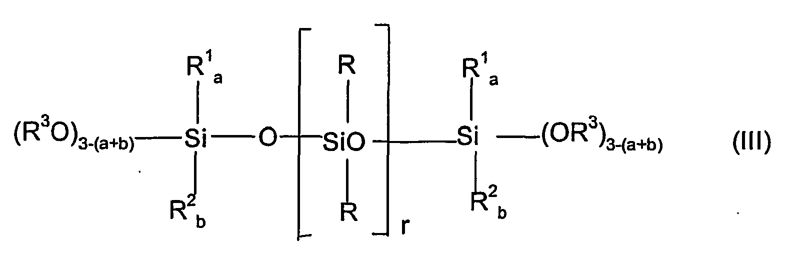
- et les polyorganosiloxanes possédant dans leur structure au moins un groupement hydroxyle consistant dans les diorganopolysiloxanes essentiellement linéaires comprenant au moins un groupement hydroxyle à chaque extrémité de chaîne de formule : 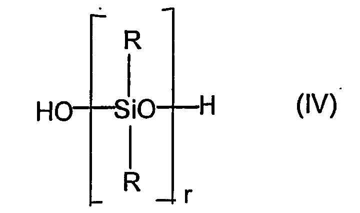 formules dans lesquelles : R¹, R², R³, a et b ont les mêmes significations que celles données ci-avant pour le silane de formule (I) ; les radicaux R, identiques ou différents, représentent chacun un radical alkyle linéaire ou ramifié en C₁-C₁₀, un radical cycloalkyle en C₅-C₁₀, un radical alcényle linéaire ou ramifié en C₂-C₆ ; r a une valeur suffisante pour conférer aux polymères de formules (III) et (IV) une viscosité de 10 à 1 000 000 mPa.s à 25°C.

4. Procédé selon l'une quelconque des revendications 1 à 3, **caractérisé en ce que** le polyalkoxysilane de fonctionnalisation est choisi parmi les silanes de formule (I) dans laquelle :
+ R¹ est choisi dans le groupe des radicaux méthyle, éthyle et phényle ;
+ R² est choisi dans le groupe des radicaux de formule :
-CH=CH₂,
-CH₂-Cl, -(CH₂)₃-Cl,
-CH₂-O-CO-C(H ou CH₃)=CH₂, -(CH₂)₃-O-CO-C(H ou CH₃)=CH₂, 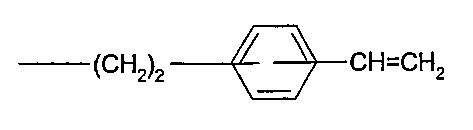 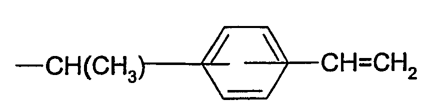
ou des mélanges de ces radicaux vinylarylalkyles, 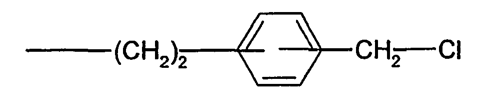 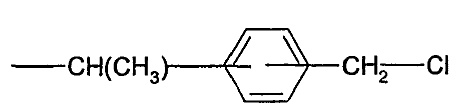 des mélanges de ces radicaux chloroalkylarylalkyles,
-(CH₂)₃-NH₂, -(CH₂)₃-NH-(CH₂)₂-NH₂,
-(CH₂)₃-SH,
+ R³ est choisi parmi les radicaux méthyle et éthyle,
+ a = 0, 1 ou 2,
+ b = 0 ou 1,
+ a + b = 0, 1 ou 2.

5. Procédé selon la revendication 4, **caractérisé en ce que** le polyalkoxysilane de fonctionnalisation est choisi parmi les silanes suivants et leurs mélanges :
tétraméthoxysilane (TMO),
tétraéthoxysilane (TEO),
tétrapropoxysilane,
méthyltriméthoxysilane (MTMO),
méthyltriéthoxysilane (MTEO),
propyltriméthoxysilane (PrTMO),
propyltriéthoxysilane (PrTEO),
phényltriméthoxysilane (PhTMO),
phényltriéthoxysilane (PhTEO),
vinyltriméthoxysilane (VTMO),
vinyltriéthoxysilane (VTEO),
3-chloropropyltriméthoxysilane,
[2-(o,m,p-chlorométhylphényl)éthyl]triméthoxysilane, [1-(o,m,p-chlorométhylphényl)éthyl]-triméthoxysilane et leurs mélanges,
3-aminopropyltriméthoxysilane,
3-aminopropyltriéthoxysilane,
[3-(2-aminoéthyl)aminopropyl]triméthoxysilane,
3-mercaptopropyltriméthoxysilane,
3-méthacryloxypropyltriméthoxysilane,
3-acryloxypropyltriméthoxysilane.

6. Procédé selon l'une quelconque des revendications 1 à 5, **caractérisé en ce que** les composés constitués essentiellement d'organo-silanolates de lithium, utilisés comme catalyseur, sont les composés de formule (II) dans laquelle les symboles R¹, R², R³, a et b ont les significations données ci-avant dans la revendication 4 à propos de la définition des silanes de fonctionnalisation.

7. Procédé selon la revendication 6, **caractérisé en ce que** les catalyseurs mis en oeuvre sont les composés constitués essentiellement de silanolates de lithium correspondant aux silanes de fonctionnalisation listés ci-avant dans la revendication 5.

8. A titre de produits industriels nouveaux, des composés à base de silanolates de lithium, **caractérisés en ce qu'**il s'agit de composés constitués essentiellement d'organo-silanolates de lithium de formule :
(R¹)ₐ(R²)_{b}(OR³)_{3-(a+b)}SiO⁻ Li⁺ (II)
où les symboles R¹, R², R³, a et b ont les significations données ci-avant dans la revendication 1.

9. Procédé de préparation des composés. à base de silanolates de lithium incluant les composés de ce type selon la revendication 8, **caractérisé en ce qu'**ils sont obtenus :
- en faisant réagir la lithine (ou hydroxyde de lithium) avec au moins un silane de fonctionnalisation de formule (I) dans laquelle les symboles R¹, R² et R³ ont les significations données ci-avant dans la revendication 1 et où a = 0, 1, 2 ou 3, b = 0 ou 1 et la somme a + b = 0, 1, 2 ou 3,
- en opérant à la température ambiante, sous atmosphère anhydre et à la pression atmosphérique.

10. Utilisation d'une quantité efficace d'au moins un composé constitué essentiellement d'organo-silanolate de lithium de formule :
(R¹)ₐ(R²)_{b}(OR³)_{3-(a+b)}SiO⁻ Li⁺ (II)
où les symboles R¹, R², R³, a et b ont les significations données ci-avant dans la revendication 1, comme catalyseur pour la préparation de polyorganosiloxane possédant dans sa structure au moins un groupement fonctionnel, chaque groupement fonctionnel étant lié à un atome de silicium, par un procédé qui consiste à faire réagir un polyorganosiloxane possédant dans sa structure au moins un groupement hydroxyle, chaque groupement hydroxyle étant lié à au moins un atome de silicium, avec par motif silanol au moins 1 mole d'au moins un polyalkoxysilane de formule
(R¹)ₐ(R²)_{b}Si (OR³)_{4-(a+b)} (I)
où les symboles R¹, R², R³, a et b ont les significations données ci-avant dans la revendication 1.

## Claims

1. Process for preparing polyorganosiloxane containing in its structure at least one functional group, each functional group being linked to a silicon atom, which consists in reacting a polyorganosiloxane containing in its structure at least one hydroxyl group, each hydroxyl group being linked to at least one silicon atom, with, per silanol unit (≡Si-OH), at least 1 mol of at least one polyalkoxysilane of formula:
(R¹)ₐ(R²)_{b}Si (OR³)_{4-(a+b)} (I)
in which:
• R¹ represents: a linear or branched C₁-C₁₀ alkyl radical; a C₅-C₁₀ cycloalkyl radical; a C₆-C₁₈ aryl radical;
• R² represents a functional group of formula:
-(Z)ₘ-(X)ₙ
with:
m = 0 or 1;
n = 1 or 2;
Z represents a divalent or trivalent C₁-C₃₀ hydrocarbon-based residue possibly containing one or more oxygen heteroatom(s), of the type such as: linear or branched, saturated or unsaturated aliphatic residue, cyclanic residue, aromatic residue, mixed aliphatic/aromatic residue;
X, when m = 0, represents an unsaturated C₂-C₆ hydrocarbon-based radical containing a double bond and optionally another double bond possibly conjugated to the first, of the type such as: linear or branched aliphatic residue, cyclanic residue;
X, when m = 1, represents a residue chosen from those of formula: chlorine, bromine or iodine atom; -O-CO-CR⁴=CR⁵R⁶ in which R⁴, R⁵ and R⁶, which may be identical or different, each represent: a hydrogen atom, a C₁-C₆ alkyl radical and/or a phenyl radical; -R^{F} in which R^{F} represents a perfluoro residue, for instance the radical -CₚF₂ₚ-CF₃ (p equal to 0 or other than 0) or the radical -C_{p'}F_{2p'}-H (p' equal to 1 or greater than 1); -NHR⁷ in which R⁷ represents a hydrogen atom, a linear or branched C₁-C₆ alkyl radical or a radical -R⁸-NH₂ in which the symbol R⁸ represents Z; -SH;
• R³ represents a linear or branched C₁-C₄ alkyl radical;
• a = 0, 1, 2 or 3;
• b = 0 or 1;
• a + b = 0, 1, 2 or 3, with the additional condition according to which when the sum a + b = 3, the symbol b cannot be a number equal to 0;
working in the presence of an effective amount of a catalyst based on a lithium derivative,
said process being **characterized by** the following points:
• said catalyst is a compound consisting essentially of a lithium organosilanolate of formula:
(R¹)ₐ(R²)_{b}(OR³)_{3-(a+b)}SiO⁻ Li⁺ (II)
in which the symbols R¹, R², R³, a and b have the meanings given above;
• said process is performed in the absence of an aliphatic alcohol of formula R³OH added to the reaction medium.

2. Process according to Claim 1, **characterized in that** from 0.001 to 3 mol of compound consisting essentially of lithium silanolate are used relative to 1 ≡Si-OH unit of the polyorganosiloxane containing in its structure at least one hydroxyl group.

3. Process according to Claim 1 or 2, **characterized in that**:
- the polyorganosiloxanes containing in their structure at least one functional group consist of essentially linear diorganopolysiloxanes comprising at least one functional group at each end of the chain, of formula: 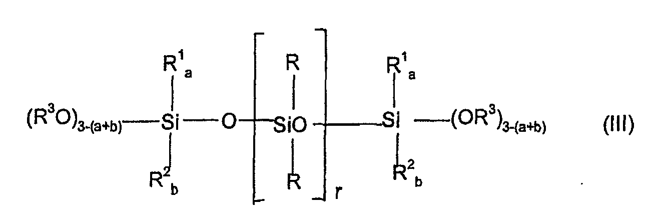
- and the polyorganosiloxanes containing in their structure at least one hydroxyl group consisting of essentially linear diorganopolysiloxanes comprising at least one hydroxyl group at each end of the chain, of formula: 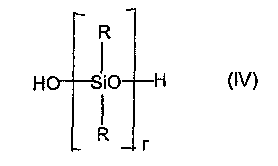
in which formulae: R¹, R², R³, a and b have the same meanings as those given above for the silane of formula (I); the radicals R, which may be identical or different, each represent a linear or branched C₁-C₁₀ alkyl radical, a C₅-C₁₀ cycloalkyl radical or a linear or branched C₂-C₆ alkenyl radical; r has a value sufficient to give the polymers of formulae (III) and (IV) a viscosity of from 10 to 1 000 000 mPa.s at 25°C.

4. Process according to any one of Claims 1 to 3, **characterized in that** the functionalizing polyalkoxysilane is chosen from the silanes of formula (I) in which:
• R¹ is chosen from the group of methyl, ethyl and phenyl radicals;
• R² is chosen from the group of radicals of formulae:
-CH=CH₂,
-CH₂-Cl, -(CH₂)₃-Cl,
-CH₂-O-CO-C (H or CH₃)=CH₂, - (CH₂)₃-O-CO-C (H or
CH₃)=CH₂, 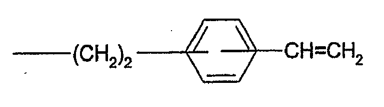 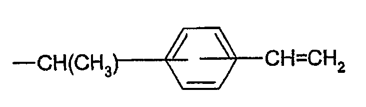 or mixtures of these vinylarylalkyl radicals, 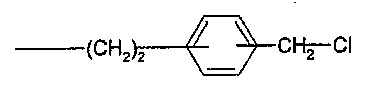 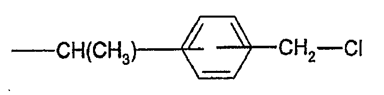 mixtures of these chloroalkylarylalkyl radicals,
-(CH₂)₃-NH₂, -(CH₂)₃-NH-(CH₂)₂-NH₂,
-(CH₂)₃-SH,
• R³ is chosen from methyl and ethyl radicals,
• a = 0, 1 or 2,
• b = 0 or 1,
• a + b = 0, 1 or 2.

5. Process according to Claim 4, **characterized in that** the functionalizing polyalkoxysilane is chosen from the following silanes, and mixtures thereof:
tetramethoxysilane (TMO),
tetraethoxysilane (TEO),
tetrapropoxysilane,
methyltrimethoxysilane (MTMO),
methyltriethoxysilane (MTEO),
propyltrimethoxysilane (PrTMO),
propyltriethoxysilane (PrTEO),
phenyltrimethoxysilane (PhTMO),
phenyltriethoxysilane (PhTEO),
vinyltrimethoxysilane (VTMO),
vinyltriethoxysilane (VTEO),
3-chloropropyltrimethoxysilane,
[2-(o,m,p-chloromethylphenyl)ethyl]trimethoxysilane,
[1-(o,m,p-chloromethylphenyl)ethyl]trimethoxysilane and mixtures thereof,
3-aminopropyltrimethoxysilane,
3-aminopropyltriethoxysilane,
[3-(2-aminoethyl)aminopropyl]trimethoxysilane,
3-mercaptopropyltrimethoxysilane,
3-methacryloxypropyltrimethoxysilane,
3-acryloxypropyltrimethoxysilane.

6. Process according to any one of Claims 1 to 5, **characterized in that** the compounds consisting essentially of lithium organosilanolates, used as catalyst, are compounds of formula (II) in which the symbols R¹, R², R³, a and b have the meanings given above in Claim 4 with regard to the definition of the functionalizing silanes.

7. Process according to Claim 6, **characterized in that** the catalysts used are compounds consisting essentially of lithium silanolates corresponding to the functionalizing silanes listed above in Claim 5.

8. As novel industrial products, compounds based on lithium silanolates, **characterized in that** they are compounds consisting essentially of lithium organosilanolates of formula:
(R¹)ₐ(R²)_{b}(OR³)_{3-(a+b)}SiO⁻ Li⁺ (II)
in which the symbols R¹, R², R³, a and b have the meanings given above in Claim 1.

9. Process for preparing compounds based on lithium silanolates including the compounds of this type according to Claim 8, **characterized in that** they are obtained:
- by reacting lithium hydroxide with at least one functionalizing silane of formula (I) in which the symbols R¹, R² and R³ have the meanings given above in Claim 1 and in which a = 0, 1, 2 or 3, b = 0 or 1 and the sum a + b = 0, 1, 2 or 3,
- by working at room temperature, under an anhydrous atmosphere and at atmospheric pressure.

10. Use of an effective amount of at least one compound consisting essentially of a lithium organo-silanolate of formula:
(R¹)ₐ(R²)_{b}(OR³)_{3-(a+b)}SiO⁻ Li⁺ (II)
in which the symbols R¹, R², R³, a and b have the meanings given above in Claim 1, as catalyst for the preparation of a polyorganosiloxane containing in its structure at least one functional group, each functional group being linked to a silicon atom, via a process that consists in reacting a polyorganosiloxane containing in its structure at least one hydroxyl group, each hydroxyl group being linked to at least one silicon atom, with, per silanol unit, at least 1 mol of at least one polyalkoxysilane of formula
(R¹)ₐ(R²)_{b}Si (OR³)_{4-(a+b)} (I)
in which the symbols R¹, R², R³, a and b have the meanings given above in Claim 1.

## Patentansprüche

1. Verfahren zur Herstellung von Polyorganosiloxan mit mindestens einer funktionellen Gruppe in seiner Struktur, wobei jede funktionelle Gruppe an ein Siliciumatom gebunden ist, bei dem man ein Polyorganosiloxan mit mindestens einer Hydroxylgruppe in seiner Struktur, wobei jede Hydroxylgruppe an mindestens ein Siliciumatom gebunden ist, mit mindestens 1 mol mindestens eines Polyalkoxysilans der Formel:
(R¹)ₐ(R²)_{b}Si (OR³)_{4-(a+b)} (I)
worin:
+ R¹ für einen linearen oder verzweigten C₁-C₁₀-Alkylrest; einen C₅-C₁₀-Cycloalkylrest oder einen C₆-C₁₈-Arylrest steht;
+ R² für eine funktionelle Gruppe der Formel:
-(Z)ₘ-(X)ₙ
mit:
m = 0 oder 1 und
n = 1 oder 2
steht;
Z für einen zwei- oder dreiwertigen C₁-C₃₀-Kohlenwasserstoffrest, der ein oder mehrere Sauerstoff-Heteroatome enthalten kann, vom Typ gesättigter oder ungesättigter, linearer oder verzweigter aliphatischer Rest, Cyclanrest, aromatischer Rest oder gemischt aliphatisch/aromatischer Rest steht;
X im Fall von m = 0 für einen ungesättigten C₂-C₆-Kohlenwasserstoffrest mit einer Doppelbindung und gegebenenfalls einer weiteren Doppelbindung, die mit der ersten konjugiert ist oder nicht, vom Typ linearer oder verzweigter aliphatischer Rest oder Cyclanrest steht;
X im Fall von m = 1 für einen Rest steht, der ausgewählt ist unter denjenigen der Formel: Chlor-, Brom- oder Iodatom; -O-CO-CR⁴=CR⁵R⁶, worin R⁴, R⁵ und R⁶ gleich oder verschieden sind und jeweils für ein Wasserstoffatom, einen C₁-C₆-Alkylrest und/oder einen Phenylrest stehen; -R^{F}, worin R^{F} für einen perfluorierten Rest steht, wie zum Beispiel den Rest -CₚF₂ₚ-CF₃ (p gleich 0 oder von 0 verschieden) oder den Rest -C_{p'}F_{2p'}-H (p' gleich 1 oder größer 1); -NHR⁷, worin R⁷ für ein Wasserstoffatom, einen linearen oder verzweigten C₁-C₆-Alkylrest oder einen Rest -R⁸-NH₂, worin das Symbol R⁸ für Z steht, steht; -SH;
+ R³ für einen linearen oder verzweigten C₁-C₄-Alkylrest steht;
+ a = 0, 1, 2 oder 3;
+ b = 0 oder 1;
+ a + b = 0, 1, 2 oder 3, mit der zusätzlichen Maßgabe, daß dann, wenn die Summe a + b = 3, das Symbol b nicht für eine Zahl gleich 0 sein kann;
pro Silanol-Einheit (≡Si-OH) umsetzt, wobei man in Gegenwart einer wirksamen Menge eines Katalysators auf Basis eines Lithiumderivats arbeitet,
wobei das Verfahren durch die folgenden Punkte **gekennzeichnet** ist:
• der Katalysator ist eine Verbindung, die im wesentlichen aus einem Lithiumorganosilanolat der Formel:
(R¹)ₐ(R²)_{b}(OR³)_{3-(a+b)}SiO⁻ Li⁺ (II)
worin die Symbole R¹, R², R³, a und b die oben angegebene Bedeutung besitzen, besteht;
• das Verfahren wird in Abwesenheit eines dem Reaktionsmedium zugesetzten aliphatischen Alkohols der Formel R³OH durchgeführt.

2. Verfahren nach Anspruch 1, **dadurch gekennzeichnet, daß** man 0,001 bis 3 mol der im wesentlichen aus Lithiumsilanolat bestehenden Verbindung auf 1 =Si-OH-Einheit des Polyorganosiloxans mit mindestens einer Hydroxylgruppe in seiner Struktur verwendet.

3. Verfahren nach Anspruch 1 oder 2, **dadurch gekennzeichnet, daß:**
- die Polyorganosiloxane mit mindestens einer funktionellen Gruppe in ihrer Struktur aus im wesentlichen linearen Diorganopolysiloxanen mit mindestens einer funktionellen Gruppe an jedem Kettenende und der Formel: 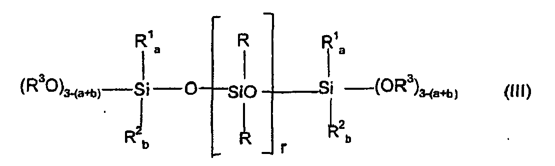 bestehen
- und die Polyorganosiloxane mit mindestens einer Hydroxylgruppe in ihrer Struktur aus im wesentlichen linearen Diorganopolysiloxanen mit mindestens einer Hydroxylgruppe an jedem Kettenende und der Formel: 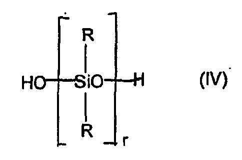 bestehen,
wobei in den Formeln R¹, R², R³, a und b die gleichen Bedeutungen wie oben für das Silan der Formel (I) angegeben besitzen; die Reste R gleich oder verschieden sind und jeweils für einen linearen oder verzweigten C₁-C₁₀-Alkylrest, einen C₅-C₁₀-Cycloalkylrest oder einen linearen oder verzweigten C₂-C₆-Alkenylrest stehen und r einen Wert hat, der dazu ausreicht, den Polymeren der Formel (III) und (IV) eine Viskosität von 10 bis 1 000 000 mPa.s bei 25°C zu verleihen.

4. Verfahren nach einem der Ansprüche 1 bis 3,
**dadurch gekennzeichnet, daß** man das funktionalisierende Polyalkoxysilan unter den Silanen der Formel (I), worin:
+ R¹ aus der Gruppe der Methyl-, Ethyl- und Phenylreste ausgewählt ist;
+ R² aus der Gruppe der Reste der Formel:
-CH=CH₂,
-CH₂-C1, -(CH₂)₃-C1,
-CH₂-O-CO-C(H oder CH₃)=CH₂, -(CH₂)₃-O-CO-C(H oder CH₃)=CH₂, 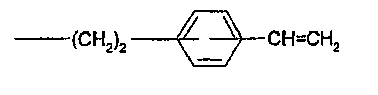 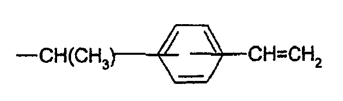
oder Mischungen dieser Vinylarylalkylreste, 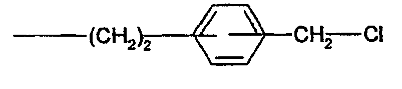 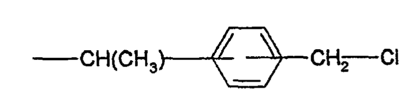 Mischungen dieser Chloralkylarylalkylreste,
-(CH₂)₃-NH₂, -(CH₂)₃-NH-(CH₂)₂-NH₂ oder
-(CH₂)₃-SH
ausgewählt ist,
+ R³ unter Methyl- und Ethylresten ausgewählt ist,
+ a = 0, 1 oder 2;
+ b = 0 oder 1;
+ a + b = 0, 1 oder 2,
auswählt.

5. Verfahren nach Anspruch 4, **dadurch gekennzeichnet, daß** man das funktionalisierende Polyalkoxysilan unter den folgenden Silanen und Mischungen davon auswählt:
Tetramethoxysilan (TMO),
Tetraethoxysilan (TEO),
Tetrapropoxysilan,
Methyltrimethoxysilan (MTMO),
Methyltriethoxysilan (MTEO),
Propyltrimethoxysilan (PrTMO),
Propyltriethoxysilan (PrTEO),
Phenyltrimethoxysilan (PhTMO),
Phenyltriethoxysilan (PhTEO),
Vinyltrimethoxysilan (VTMO),
Vinyltriethoxysilan (VTEO),
3-Chlorpropyltrimethoxysilan,
[2-(o,m,p-Chlormethylphenyl)ethyl]trimethoxysilan,
[1-(o,m,p-Chlormethylphenyl)ethyl]trimethoxysilan und Mischungen davon,
3-Aminopropyltrimethoxysilan,
3-Aminopropyltriethoxysilan,
[3-(2-Aminoethyl)aminopropyl]trimethoxysilan,
3-Mercaptopropyltrimethoxysilan,
3-Methacryloxypropyltrimethoxysilan,
3-Acryloxypropyltrimethoxysilan.

6. Verfahren nach einem der Ansprüche 1 bis 5,
**dadurch gekennzeichnet, daß** es sich bei den im wesentlichen aus Lithiumorganosilanolaten bestehenden Verbindungen, die als Katalysator verwendet werden, um Verbindungen der Formel (II), worin die Symbole R¹, R², R³, a und b die oben in Anspruch 4 bezüglich der Definition der funktionalisierenden Silane angegebene Bedeutung besitzen, handelt.

7. Verfahren nach Anspruch 6, **dadurch gekennzeichnet, daß** es sich bei den eingesetzten Katalysatoren um Verbindungen handelt, die im wesentlichen aus den Lithiumsilanolaten, die den oben in Anspruch 5 aufgeführten funktionalisierenden Silanen entsprechen, bestehen.

8. Verbindungen auf Basis von Lithiumsilanolaten als neue technische Produkte, **dadurch gekennzeichnet, daß** es sich um Verbindungen handelt, die im wesentlichen aus einem Lithiumorganosilanolat der Formel:
(R¹)ₐ(R²)_{b}(OR³)_{3-(a+b)}SiO⁻ Li⁺ (II)
worin die Symbole R¹, R², R³, a und b die oben in Anspruch 1 angegebene Bedeutung besitzen, bestehen.

9. Verfahren zur Herstellung von Verbindungen auf Basis von Lithiumsilanolaten einschließlich der Verbindungen dieses Typs nach Anspruch 8, **dadurch gekennzeichnet, daß** man sie erhält, indem man:
- Lithiumhydroxid mit mindestens einem funktionalisierenden Silan der Formel (I), worin die Symbole R¹, R² und R³ die oben in Anspruch 1 angegebene Bedeutung besitzen und a = 0, 1, 2 oder 3, b = 0 oder 1 und die Summe a + b = 0, 1, 2 oder 3, umsetzt,
- bei Umgebungstemperatur, unter wasserfreier Atmosphäre und bei Normaldruck arbeitet.

10. Verwendung einer wirksamen Menge mindestens einer Verbindung, die im wesentlichen aus einem Lithiumorganosilanolat der Formel:
(R¹)ₐ(R²)_{b}(OR³)_{3-(a+b)}SiO⁻ Li⁺ (II)
worin die Symbole R¹, R², R³, a und b die oben in Anspruch 1 angegebene Bedeutung besitzen, besteht, als Katalysator zur Herstellung von Polyorganosiloxan mit mindestens einer funktionellen Gruppe in seiner Struktur, wobei jede funktionelle Gruppe an ein Siliciumatom gebunden ist, durch ein Verfahren, bei dem man ein Polyorganosiloxan mit mindestens einer Hydroxylgruppe in seiner Struktur, wobei jede Hydroxylgruppe an mindestens ein Siliciumatom gebunden ist, mit mindestens 1 mol mindestens eines Polyalkoxysilans der Formel:
(R¹)ₐ(R²)_{b}Si (OR³)_{4-(a+b)} (I)
worin die Symbole R¹, R², R³, a und b die oben in Anspruch 1 angegebene Bedeutung besitzen, pro Silanol-Einheit umsetzt.
